Europäisches Patentamt

European Patent Office

Office européen des brevets

(11) Veröffentlichungsnummer: **0 165 445**

**A1**

(12) **EUROPÄISCHE PATENTANMELDUNG**

(21) Anmeldenummer: 85105743.0

(22) Anmeldetag: 10.05.85

(51) Int. Cl.⁴: **C 02 F 7/00**
C 02 F 3/26

(30) Priorität: 18.05.84 DE 8415178 U

(43) Veröffentlichungstag der Anmeldung:
27.12.85 Patentblatt 85/52

(84) Benannte Vertragsstaaten:
AT BE CH DE FR GB IT LI LU NL SE

(71) Anmelder: Bollmann-Filter-Gesellschaft mbH
Heerskamp
D-2210 Itzehoe(DE)

(71) Anmelder: Heinz Gamradt Bau-Gesellschaft mbH
Goslarer Ufer 1-5
D-1000 Berlin 10(DE)

(72) Erfinder: Kahl, Helmut
Wietholt 29
D-2211 Vaale(DE)

(72) Erfinder: Gamradt, Heinz
Schinkelstrasse 4
D-1000 Berlin 33(DE)

(74) Vertreter: Glawe, Delfs, Moll & Partner Patentanwälte
Rothenbaumchaussee 58 Postfach 2570
D-2000 Hamburg 13(DE)

(54) Vorrichtung zum Begasen von Gewässern.

(57) Eine mobile Vorrichtung zum Begasen von Gewässern wird dadurch ermöglicht, daß ein Säulenreaktor (1), ein Begasungsschrank (3) und ein elektrischer Anschluß (2) in Kompaktanordnung auf einem Rahmen (5) angeordnet sind, der fahrbar ausgebildet sein kann.

Fig. 1

EP 0 165 445 A1

GLAWE, DELFS, MOLL & PARTNER

PATENTANWÄLTE **0165445**
ZUGELASSENE VERTRETER BEIM EUROPÄISCHEN PATENTAMT

RICHARD GLAWE
Dr.-Ing

KLAUS DELFS
Dipl.-Ing

WALTER MOLL
Dipl.-Phys Dr rer nat

ULRICH MENGDEHL
Dipl.-Chem Dr rer nat.

ULRICH GLAWE
Dipl.-Phys Dr rer nat

HEINRICH NIEBUHR
Dipl.-Phys Dr. phil. habil

8000 München 26
Postfach 26 01 62
Liebherrstraße 20

2000 Hamburg 13
Postfach 25 70
Rothenbaumchaussee 58

Tel. (089) 22 65 48
Telex.5 22 505
Telefax (089) 22 39 38

Tel. (040) 4 10 20 08
Telex 2 12 921
Telefax (040) 45 89 84

HAMBURG

1) Bollmann-Filter-
   Gesellschaft mbH

2) Heinz Gamradt
   Bau-Ges. m b H

---

Vorrichtung zum Begasen
von Gewässern

---

p 11554/85 D/MH

Beschreibung

Die Erfindung bezieht sich auf eine Vorrichtung zum Begasen von
Gewässern.

Solche Begasungsanlagen dienen z.B. dazu, natürliche Gewässer dann mit Sauerstoff anzureichern, wenn durch widrige
Witterungsverhältnisse der Sauerstoffgehalt im Wasser so
tief gesunken ist, daß ein Überleben der Fauna und Flora
im Wasser selbst gefährdet erscheint. Besonders gefährdet
sind naturgemäß stehende oder wenig bewegte Gewässer und
das speziell in solchen Zeiten in denen wenig Sauerstoff
von außen, z.B. durch Regenfälle und Wind, zugeführt wird,
d.h. insbesondere auch in langen Trockenperioden.

Diese Anlagen an sich sind bekannt und sind an verschiedensten Orten auch bereits installiert. Sie bestehen aus Säulenreaktor, Begasungsregelschrank, elektrischem Anschluß mit
Schaltkasten, Gastank und Verdampfer. Es wird dabei aus dem
zu belüftenden Gewässer an einer oder mehreren Stellen
Flüssigkeit entnommen durch die Begasungsanlage geschickt
und mit Sauerstoff angereichert an einer oder mehreren Stellen dem Gewässer wieder zugeführt. Nachteilig war bisher jedoch, daß infolge der festen Installation jede Anlage nur für ein bestimmtes oder ggf. direkt nebeneinanderliegendes Gewässer eingesetzt werden konnte.

Erfindungsgemäß wird dieser Mangel dadurch behoben, daß Säulenreaktor, Begasungsregelschrank und elektrischer Anschluß mit Schaltkasten in auf einem Rahmen und/oder Wagen als kompakte Vorrichtung angeordnet sind.

Wie leicht zu ersehen, kann man diese Vorrichtung dann jeweils für mehrere, örtlich weiter voneinander entfernt liegende Gewässer, einsetzen und wird somit insbesondere auch in die Lage versetzt, solche Gewässer zu begasen, die normalerweise von ihrer Ausdehnung her zu klein sind und die Installation einer festen Begasungsanlage nicht lohnen.

In weiterer Ausführung der Erfindung wird vorgeschlagen, daß die in der mobilen Begasungsanlage verwendeten Säulenreaktoren in der Bauhöhe ca. 20 bis 25 % geringer ausgeführt werden, als die bisher marktüblichen. Versuche haben gezeigt, daß auch mit solchen in der Höhe geringer ausgeführten Säulenreaktroren eine ausreichende Begasung der Flüssigkeit erzielt werden kann. Der Vorteil dieser Säulenreaktoren mit geringerer Bauhöhe liegt darin, daß man diese dann auf kleinere Wagen oder Hänger montieren kann, die ohne Schwierigkeiten auch vom PKW gezogen werden können.

Weiter wird erfindungsgemäß vorgeschlagen, daß bei Anordnung von zwei Säulenreaktorelementen in der Kompaktanordnung, diese wahlweise parallel oder hintereinander geschaltet werden können. Die Möglichkeit des Betriebes, auch in Reihenschaltung, bietet die Möglichkeit, den nur
geringfügigen Nachteil, der durch die etwas geringere Bauhöhe gegeben ist - die geringfügige Verringerung der
in die Flüssigkeit im Säulenreaktor eingebrachten Gasmenge - wieder auszugleichen durch die Betriebsweise.

Um die Vorrichtung möglichst mobil zu halten, wird neuerungsgemäß weiter vorgeschlagen, daß der Rahmen, auf
dem die Anlage montiert ist, mittels Schnellanschlüssen
auf Fahrzeuge, insbesondere Fahrzeuganhänger, aufgesetzt
werden kann.

Die zur Begasungsanlage weiterhin zugehörigen Gastanks
und Verdampfer werden weiter wie nach der Erfindung vorgeschlagen, auf einen gesonderten Rahmen und/oder Fahrzeug
angeordnet, die Gastanks deshalb, damit sie jederzeit -
leer gegen voll - ausgetauscht werden können, die Verdampfer deshalb, weil ein gewisser Sicherheitsabstand
von den Säulenreaktoren erwünscht ist. An der den Säulenreaktor enthaltenden Vorrichtung sind dabei Anschlüsse zur
Verbindung mit dem gesondert aufzustellenden Gastanks und
Verdampfer vorgesehen.

In konsequenter Fortführung des Erfindungsgedankens wird
auch vorgeschlagen, daß die Wasserentnahme aus dem zu
belüftenden Gewässer und die Wiedereinbringung des mit
Gas angereicherten Wassers in das Gewässer, über mobil
verlegte Schläuche erfolgt.

Letztlich wird erfindungsgemäß noch vorgeschlagen, daß
am Auslauf der mobilen Schläuche für die Wiedereinbringung des mit Gas angereicherten Wassers in das Gewässer Drosselelemente angeordnet sind. Dies ist wünschenswert, weil die Begasung des Wassers unter Druck erfolgt und bei Fortfall des Druckes ein Teil des eingebrachten Gases aus dem Wasser wieder austritt, dies
jedoch auf dem Transport bis in das zu belüftende Gewässer hinein, nicht erwünscht ist. Erfolgt der Austritt nachdem das mit Gas angereicherte Wasser in
das natürliche Gewässer wieder eingebracht ist, so
wird der austretende Sauerstoff zum mindestens zum ganz
großen Teil von der umgebenden sauerstoffarmen Flüssigkeit aufgenommen.

Die Erfindung sei anhand der beigefügten Zeichnung beispielsweise erläutert.

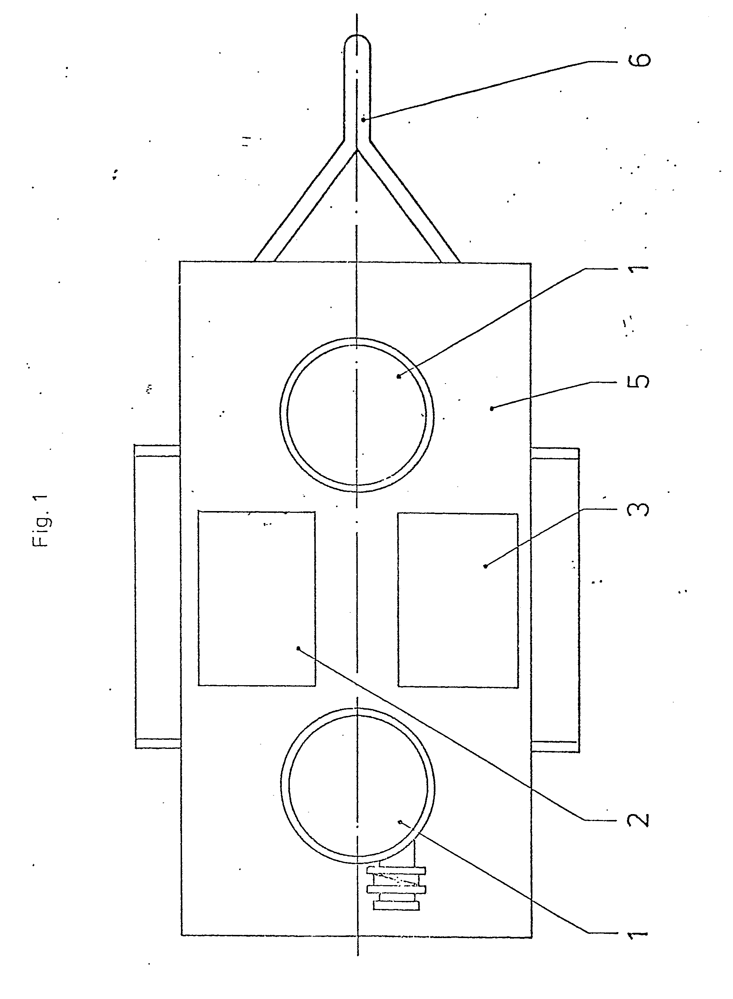

Fig. 1 zeigt eine erfindungsgemäße Kompaktbegasungseinheit mit folgenden Elementen: 1 sind die beiden
Säulenreaktoren die über entsprechende Verbindungen -
was nicht bildlich dargestelle ist - sowohl parallel
wie auch hintereinander geschaltet werden können,
2 ist der Schaltkasten mit elektrischem Anschluß,
3 kennzeichnet den Begasungsregelschrank.

Die ganzen Elemente sind auf einem Rahmen 5 angeordnet
und dieser ist auf einem schematisch dargestellten
PKW-Anhänger 6 montiert.

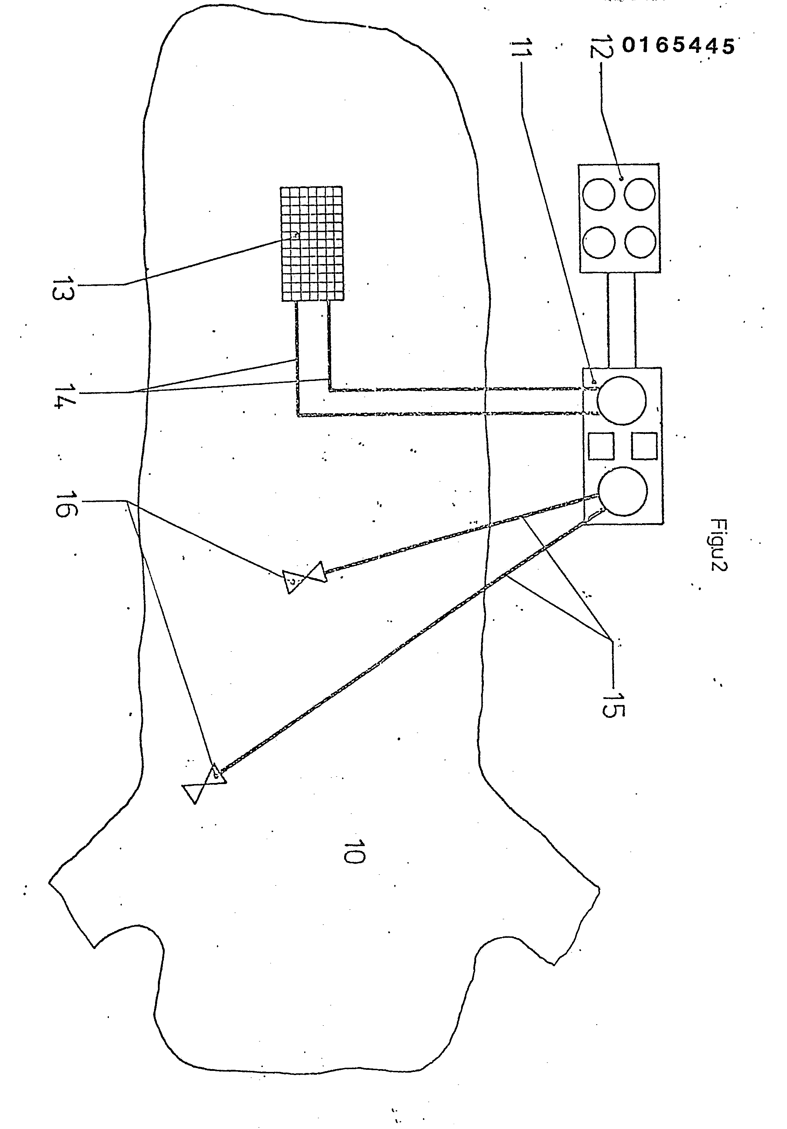

Fig. 2 zeigt schematisch die Anordnung einer Flüssigkeitsbegasungsanlage an einem zu belüftenden Gewässer.
An dem Gewässer 10 steht die mobile Kompaktbegasungseinheit 11 und auf einem weiteren Wagen oder Rahmen 12
die Gastanks und Verdampfer. Vom Ponton 13 wird das
Wasser aus dem Gewässer 10 entnommen und über die
schematisch dargestellten Rohrleitungen 14 der mobilen
Begasungseinheit zugeführt. Über die Rohrleitungen 15 fließt das mit Gas angereicherte Wasser über die Auslaufstellen 16 in das freie Gewässer zurück, wobei
neuerungsgemäß an den Auslaufstellen 16 Drosselelemente
vorgesehen sein können. Die Auslaufstellen 16 des mit
Gas angereicherten Wassers werden möglichst ein Stück
unterhalb der Wasseroberläche angeordnet, um eine
gute Vermischung des mit Gas angereicherten Wassers
mit dem umgebenden Wasser zu erreichen ehe diese
Mischung der Wasseroberfläche erreicht.

Patentansprüche

1. Vorrichtung zum Begasen von Gewässern, dadurch gekennzeichnet, daß ein Säulenreaktor (1), ein Begasungsregelschrank (3) und elektrischer Anschluß (2) in Kompaktanordnung auf einem Rahmen (5) angeordnet sind.

2. Vorrichtung nach Anspruch 1, dadurch gekennzeichnet, daß der Rahmen fahrbar ist.

3. Vorrichtung nach Anspruch 2, dadurch gekennzeichnet, daß der fahrbare Rahmen als Kfz.-Anhänger ausgebildet ist.

4. Vorrichtung nach Anspruch 3, dadurch gekennzeichnet, daß der Rahmen lösbar auf einem Fahrgestell angeordnet ist und beide Teile mit zusammenwirkenden Schnellanschlüssen ausgerüstet sind.

5. Vorrichtung nach einem der Ansprüche 1 bis 4, dadurch gekennzeichnet, daß zwei Säulenreaktoren vorgesehen sind und deren Verbindungsrohre ein Serien/Parallel-Schaltelement enthalten.

6. Vorrichtung nach einem der Ansprüche 1 bis 5, dadurch gekennzeichnet, daß sie Anschlüsse zur Verbindung mit gesondert aufzustellenden Gastanks und Verdampfer aufweist.

7. Vorrichtung nach einem der Ansprüche 1 bis 6, dadurch gekennzeichnet, daß Wasserführungsschläuche vorgesehen sind und daß die für die Wiedereinbringung des angereicherten Wassers vorgesehenen Wasserführungsschläuche am Ende ein Drosselelement aufweisen.

8. Vorrichtung nach einem der Ansprüche 1 bis 7, dadurch gekennzeichnet, daß die Wasserführungsschläuche lösbar sind.

Fig. 1

0165445

0165445

11

12

13

14

16

15

10

Figu2

Europäisches Patentamt

**EUROPÄISCHER RECHERCHENBERICHT**

**0165445**
Nummer der Anmeldung

EP 85 10 5743

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-2 630 465   (ODENWALDWERKE RITTERSBACH)<br>* Seite 1, Ansprüche 1,4; Seite 4, erster Absatz * | 1-4 | C 02 F    7/00<br>C 02 F    3/26 |
| Y | US-A-3 920 552   (K.F. ELKERN Jr. et al.)<br>* Spalte 1, Zeilen 6-66; Spalte 2, Zeilen 16-49; Spalte 3, Zeilen 21-61;  Spalte 3, Zeile 66 - Spalte 4, Zeile 56 * | 1-4,6, 7 | |
| Y | US-A-3 956 124   (UNION CARBIDE)<br>* Spalte 4, Zeilen 1-60; Spalte 9, Zeilen 56-66 * | 1,6,7 | |
| A | FR-A-2 215 391   (WATER-LINE)<br><br>* Seite 1, erster Absatz; Seite 5, Zeilen 17-28 * | | RECHERCHIERTE SACHGEBIETE (Int Cl 4)<br><br>C 02 F |
| A | GB-A- 742 347   (UNION RHEINISCHE)<br>* Figuren 1-4 * | | |
| A | FR-A-1 575 592   (DORR-OLIVER)<br><br>* Seite 4, zweiter Absatz - Seite 5, erster Absatz; Figuren 4,5 * | | |

Der vorliegende Recherchenbericht wurde für alle Patentansprüche erstellt

| Recherchenort | Abschlußdatum der Recherche | Prüfer |
|---|---|---|
| DEN HAAG | 09-09-1985 | TEPLY J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument